# EUROPEAN PATENT SPECIFICATION

(11) **EP 4 583 065 B1**
(45) Date of publication and mention of the grant of the patent: **19.08.2026**
(21) Application number: 24223334.4
(22) Date of filing: 27.12.2024
(51) Int. Cl.: G06V 10/764, G06V 10/82

(54) **METHOD AND SYSTEM FOR A PROGRESSIVE MULTI-LEVEL TRAINING FRAMEWORK WITH LOGIT-MASKING STRATEGY**
VERFAHREN UND SYSTEM FÜR EIN PROGRESSIVES MEHRSTUFIGES TRAININGSRAHMENWERK MIT PROTOKOLLMASKIERUNGSSTRATEGIE
PROCÉDÉ ET SYSTÈME POUR CADRE D'APPRENTISSAGE PROGRESSIF À NIVEAUX MULTIPLES AVEC STRATÉGIE DE MASQUAGE DE JOURNALIT

(30) Priority: 03.01.2024 IN 202421000537
(43) Date of publication of application: 09.07.2025
(73) Proprietor: Tata Consultancy Services Limited, Maharashtra (IN)
(72) Inventor: VASUDEVAN, Bagya Lakshmi, 600097 Tamil Nadu (IN); GUBBI LAKSHMINARASIMHA, Jayavardhanarama, 560066 Bangalore (IN); SHARMA, Gaurav, 110001 New Delhi (IN); CHATTERJEE, Kallol, 201303 Noida (IN); CHAKRAPANI, Chakrapani, 201303 Noida (IN); BHATTACHARYA, Gaurab, 560066 Bangalore (IN); RAJAGOPALAN, Ramachandran, 600097 Thoraipakkam (IN)
(74) Representative: Goddar, Heinz J.

(56) References cited:
- BHATTACHARYA GAURAB ET AL: "PMTL: A Progressive Multi-Level Training Framework for Retail Taxonomy Classification", 2024 IEEE/CVF WINTER CONFERENCE ON APPLICATIONS OF COMPUTER VISION WORKSHOPS (WACVW), IEEE, 1 January 2024 (2024-01-01), pages 736 - 743, XP034588823, DOI: 10.1109/WACVW60836.2024.00085
- BOONE-SIFUENTES TANYA TBOONESIFUENTES@DEAKIN EDU AU ET AL: "A Mask-based Output Layer for Multi-level Hierarchical Classification", PROCEEDINGS OF THE 9TH IEEE/ACM INTERNATIONAL CONFERENCE ON MOBILE SOFTWARE ENGINEERING AND SYSTEMS, ACMPUB27, NEW YORK, NY, USA, 17 October 2022 (2022-10-17), pages 3833 - 3837, XP058899728, ISBN: 978-1-4503-9704-9, DOI: 10.1145/3511808.3557534
- INOUE MATHEUS ET AL: "Semantic Hierarchy-based Convolutional Neural Networks for Image Classification", 2020 INTERNATIONAL JOINT CONFERENCE ON NEURAL NETWORKS (IJCNN), IEEE, 19 July 2020 (2020-07-19), pages 1 - 8, XP033831574, DOI: 10.1109/IJCNN48605.2020.9207246
- PIZARRO IVÁN ET AL: "An Attention-Based Architecture for Hierarchical Classification With CNNs", IEEE ACCESS, vol. 11, 1 January 2023 (2023-01-01), USA, pages 32972 - 32995, XP093267972, ISSN: 2169-3536, DOI: 10.1109/ACCESS.2023.3263472

## Description

### CROSS-REFERENCE TO RELATED APPLICATIONS AND PRIORITY

The present application claims priority from Indian patent application number 202421000537, filed on January 03, 2024.

### TECHNICAL FIELD

The disclosure herein generally relates to the field of a taxonomy classification, and more particularly, a method and system for a progressive multi-level training framework with a logit-masking strategy for retail taxonomy classification.

### BACKGROUND

Hierarchical labelling of objects is a natural and frequent phenomenon for categorization irrespective of the domain. This is predominant in the retail sector where millions of products are organized to support hierarchical labelling, e.g., biscuits will be placed under the snacks section of the grocery unit. Due to the recent exponential growth in the e-commerce sector, this problem is also apparent to effectively onboard and retrieve products in online platforms. Hence, in retail industry, taxonomy of objects plays a major role as far as product alignment, association and customer experience is concerned. Out of different objects, apparel taxonomy classification is a crucial aspect due to its large variation, high inter-class similarity, inter-relationship of labels and significant global market share. Hence, hierarchical fashion taxonomy classification framework is a critical component to ensure automatic internal mapping and association of products, faster retrieval with few clicks and improved customer satisfaction.

In recent years, several research works have explored hierarchical taxonomy classification in fashion domain and beyond. Traditionally, a hierarchical training is performed using a global classifier or by level-based or parent-node based local classifier. The level-based local classifier trains separate models for each level; hence label inconsistency problem crops up where outputs of different levels create an impossible combination (e.g., menswear → top-wear → leggings). To mitigate this, parent node-based local classifier can be trained where the model in one level is selected based on the decision by its predecessor. However, this is computationally expensive, especially in retail scenario having large number of classes. Moreover, error propagation from previous level outputs can significantly impact its performance. Also, existing hierarchical taxonomy classification frameworks are suited for large-scale datasets, and they are not directly applicable to few-shot datasets, given the existing training strategy. Boone-Sifuentes et al. ("A Mask-based Output Layer for Multi-level Hierarchical Classification", PROCEEDINGS OF THE 9TH IEEE/ACM INTERNATIONAL CONFERENCE ON MOBILE SOFTWARE ENGINEERING AND SYSTEMS, ACMPUB27, NEW YORK, NY, USA, 17 October 2022) relates to a hierarchical image classification method that uses multiple hierarchical levels implemented as dense layers with output masking. The method implements a top-down divide-and-conquer strategy through a masking mechanism to enforce that predictions comply with the embedded hierarchy structure.

### SUMMARY

Embodiments of the present disclosure present technological improvements as solutions to one or more of the above-mentioned technical problems recognized by the inventors in conventional systems.

It is to be understood that both the foregoing general description and the following detailed description are exemplary and explanatory only and are not restrictive of the invention, as claimed. The invention is set out in the appended claims.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a block diagram of a system for a progressive multi-level training framework with a logit-masking strategy for retail taxonomy classification, according to some embodiments of the present disclosure.
FIG. 2 is a functional block diagram to illustrate a system for a progressive multi-level training framework with a logit-masking strategy for retail taxonomy classification, according to some embodiments of the present disclosure.
FIG. 3 is a schematic diagram to show, according to some embodiments of the present disclosure.
FIG. 4A and 4B is an exemplary flow diagram illustrating a processor-implemented method for a progressive multi-level training framework with a logit-masking strategy for retail taxonomy classification, according to some embodiments of the present disclosure.
FIG. 5 is a functional block diagram to illustrate the schematic of visual examples of taxonomy classification and comparison with state-of-the-art, according to some embodiments of the present disclosure.
FIG. 6 is a functional block diagram to illustrate the schematic of visual examples of retrieval performance of a progressive multi-level training with logit masking (PMTL), according to some embodiments of the present disclosure.
FIGS. 7A and 7B are schematic diagrams to show comparison for top-k retrieval accuracy for Deep Fashion dataset, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible

Retail taxonomy classification provides hierarchical labelling of items, and it has widespread applications, ranging from product onboarding, product arrangement and faster retrieval. Traditionally, hierarchical classification in retail domain is performed using global or local feature extractors and employing different branches for different levels. However, in the state of the art, two problems become apparent, i.e. error propagation from previous levels which affects the decision-making of the model and the label inconsistency within levels creating impossible sets. Also, existing methods are not designed to act on few-shot datasets and the training framework relies on large datasets for generalized performance. To tackle these challenges, embodiments herein provide a method and system for a progressive multi-level training framework with a logit-masking strategy for retail taxonomy classification.

A Progressive Multi-level Training with Logit masking (PMTL) employs a level-wise training framework using cumulative global representation to enhance and generalize output at every level and minimize error propagation. Herein, the logit masking strategy is used to mask all irrelevant logits of a level and enforce the model to train using only the relevant logits, thereby minimizing label inconsistency. Further, PMTL is a generalized framework that can be employed to any full-shot and few-shot learning scheme without bells and whistles. Herein, the PMTL is a generalized hierarchical taxonomy classification framework for few-shot and full-shot data. The PMTL enables the models to be trained separately for each level, hence reducing error propagation problems during training. To further enhance the model's performance at each level and get the label-wise constraint from the previous level, the global representation from the model of previous level is augmented.

During the training, the logit masking strategy is used to restrict the model to learn only relevant classes through part of final classification layer, thereby addressing the label inconsistency issue and incorporating the benefit of parent node-based local classifier. This framework is generalized irrespective of dataset size and can be attached to any hierarchical classification network, including few-shot methods such as without bells and whistles.

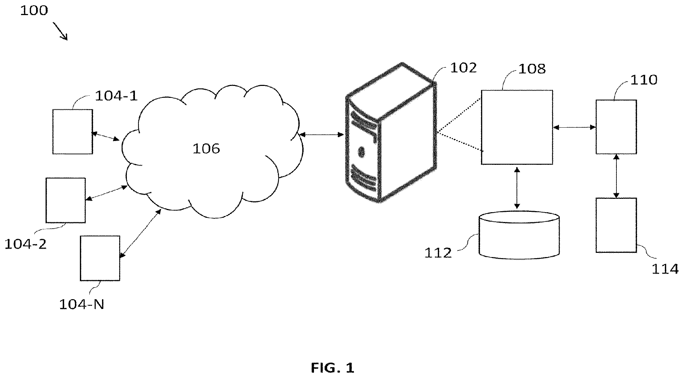

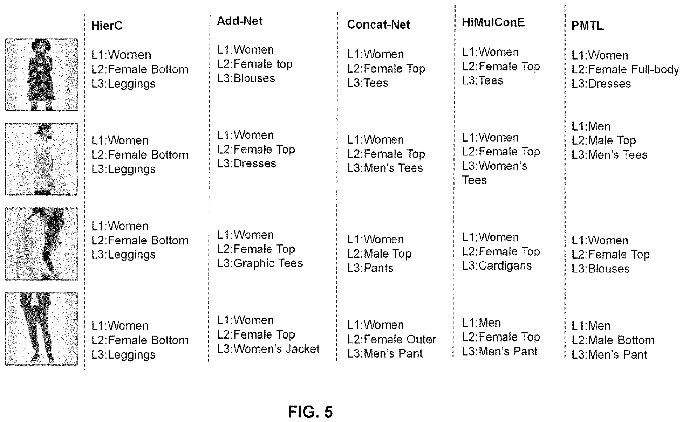

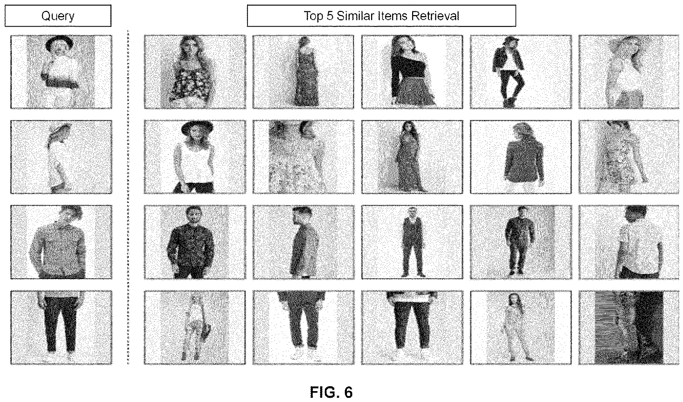

Referring now to the drawings, and more particularly to FIG. 1 through FIG. 7B, where similar reference characters denote corresponding features consistently throughout the figures, there are shown preferred embodiments, and these embodiments are described in the context of the following exemplary system and/or method.

FIG. 1 illustrates a block diagram of a system for a progressive multi-level training framework with a logit-masking strategy for retail taxonomy classification, according to some embodiments of the present disclosure. Although the present disclosure is explained considering that the system 100 is implemented on a server, it may be understood that the system 100 may comprise one or more computing devices 102, such as a laptop computer, a desktop computer, a notebook, a workstation, a cloud-based computing environment and the like. It will be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation, and the like. The I/O interface 104 is communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 supports various connectivity options such as BLUETOOTH^{®}, USB, ZigBee, and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. Further, the system 100 comprises at least one memory 110 with a plurality of instructions, one or more databases 112, and one or more hardware processors 108 which are communicatively coupled with the at least one memory to execute a plurality of modules 114 therein. The components and functionalities of the system 100 are described further in detail.

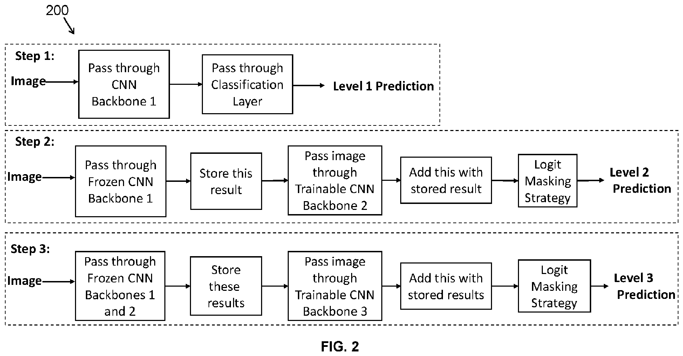

FIG. 2 is a functional block diagram 200 to illustrate a Progressive Multi-level Training framework with a Logit-masking strategy (PMTL) for retail taxonomy classification, according to some embodiments of the present disclosure. In one embodiment, the system 100 is configured to provide a generalized hierarchical taxonomy classification framework for few-shot and full-shot data. PMTL enables the models to be trained separately for each level, hence reducing error propagation problems during training. To further enhance the model's performance at each level and the label-wise constraint from the previous level is obtained, and the global representation from the model of previous level is augmented. During the training, the logit masking strategy is used to restrict the model to learn only relevant classes through part of final classification layer, thereby addressing the label inconsistency issue and incorporating the benefit of parent node-based local classifier. This framework is generalized irrespective of dataset size and can be attached to any hierarchical classification network, including few-shots without bells and whistles.

It would be appreciated that in a visual recognition, a category hierarchy exploits the relationship between coarse and fine-grained classes and has demonstrated improvement in classification performance. Traditionally, hierarchical image classification frameworks either train a global network followed by separate classification branches for different levels or they go for multi-step training process using local classifiers per level or per parent node. However, global classifiers often give inferior performance to local classifiers since features of global classifier are not specialized for each level. On the other hand, local classifier-based approaches face two problems, i.e., label inconsistency in local classifier per level and error propagation in local classifier per node. To address this, the PMTL is trained progressively with different levels of hierarchical classifier by considering the proposed label masking strategy to overcome the label inconsistency issue. By this, the model is enforced to only focus on relevant classes depending on its previous label while training. Also, contrary to local classifier per node, the final output of a level herein does not determine the model's decision of choosing a model in the next level and addresses the error propagation problem.

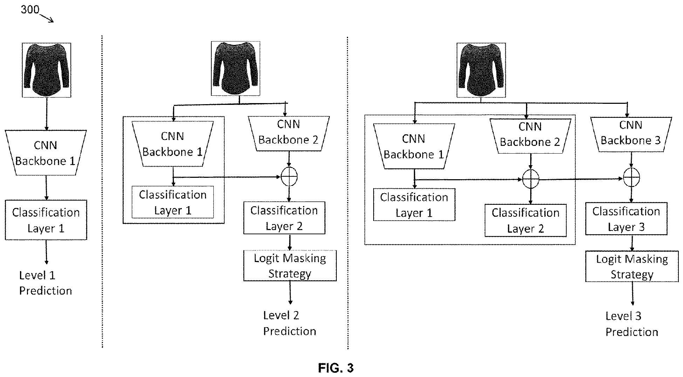

FIG. 3 is a schematic diagram 300 to illustrate training of a framework for 3-level taxonomy classification, according to some embodiments of the present disclosure. The hierarchical classification models are trained by one of the following three ways: (a) global network followed by classification layers for each level; (b) level-wise local classifier; and (c) parent node-wise local classifier. In Progressive Multi-Level Training (PMT), features from all these training methods are consolidated to enhance the taxonomy classification performance and alleviate the challenges. PMT is a hierarchical training process where models are separately trained for each level. The level-wise approach is adopted to reduce error propagation in subsequent levels. In the first level (root node training), the model is trained independently using cross-entropy loss. However, from the second level, the global representation of the predecessor model is fused to the response of the model at that level. In this way, the global representation of the first level is added to the feature of second level before classification layers. This insertion enhances the representation in subsequent layers by providing global features. However, it does not directly participate in decision-making on choice of the model in a level, as opposed to the parent-node wise local classifier and hence does not propagate error. Also, it should be noted that the global representation changes as the system go deep into the finer levels, contrary to the global network-based training approach, where same global representation is fed to all branches corresponding to coarse and fine levels. Further, while adding features from the predecessor, the system freezes the weights of the predecessor model to prevent its weights aligning to new task using labels of a new level.

In the training framework, the system hypothesizes that the global representation plays a critical role in enhancing the representation of subsequent layers and hence its insertion improves the taxonomy classification performance. Also, the system hypothesizes that the global representation should change for different levels by incorporating more information from all predecessors.

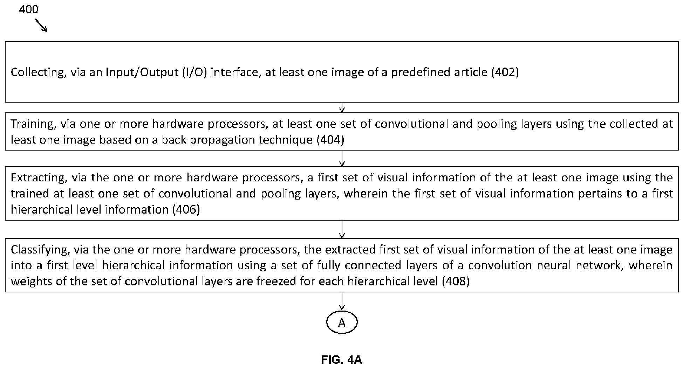

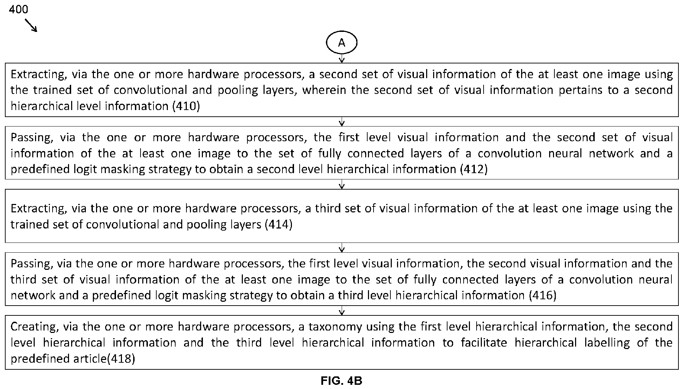

FIG. 4A and 4B (collectively referred as FIG. 4) is a flow diagram illustrating a processor-implemented method 400 for a progressive multi-level training framework with a logit-masking strategy for retail taxonomy classification implemented by the system 100 of FIG. 1. Functions of the components of the system 100 are now explained through steps of flow diagram in FIG. 4, according to some embodiments of the present disclosure.

Initially, at step 402 of the processor-implemented method 400, the one or more hardware processors 108 are configured by the programmed instructions to collect, via an input/output interface, at least one image of a predefined article. For example, an In-Store subset of the dataset is collected to perform taxonomy classifications using three levels: gender (male, female), clothing type (upper-wear, bottom-wear, full-body, and outer-wear) and product category (shirt, trouser, etc.).

At the next step 404 of the processor-implemented method 400, the one or more hardware processors 108 are configured by the programmed instructions to train at least one set of convolutional and pooling layers using the collected at least one image based on a back propagation technique.

Although PMT utilizes progressive level-wise training and progressive enhancement of global representation for better classification, it does not address the label inconsistency problem. Traditionally, this problem has been resolved by training separate model for each parent node and choosing one of the models based on the decision of its predecessor. However, it has two problems: 1) the results of the subsequent layers can go wrong if the predecessor gives incorrect response; and 2) training one model for each parent node is a time-consuming and resource-exhaustive operation.

Therefore, during training, the system 100 considers predecessor level ground truth as an input and masks a part of the logit and trains the model with the remaining part. Hence, model weights are updated only using the relevant logits in the classification layer and irrelevant logits are masked and have no impact on training.

Further, the system 100 can make one model mimic the behaviour of a set of models, each for a parent node. Also, the system 100 can keep one model at one level, thereby reducing error propagation and resource consumption while incorporating label consistency across the levels. In logit masking, only the relevant logits are kept according to a previous level ground truth and mask all irrelevant logits before loss computation.

It is assumed that the previous level ground truth annotation *GTₚᵣₑᵥ* is a one-hot encoding vector of d classes and training level logit *L* is a vector of *n* classes. Then, it can be represented as: ${\left.{GT}_{prev}∈\left\{0, 1\right\}\right\}}^{d} : {\sum }_{i = 1}^{d} {GT}_{prev} \left(i\right) = 1$

It is further assumed that the *i*^{th} class in previous level has *nᵢ* child nodes, total number of classes in the training level is *n* = Í*d i=*1*nᵢ.* Using this the logit mask *Maskₚᵣₑᵥ* for *GTₚᵣₑᵥ* can be represented as follows: $\begin{matrix}{Mask}_{prev} = \left[{Mask}_{1 ,} {Mask}_{2 , … … .},{Mask}_{d}\right] \\ {Mask}_{prev} = {GT}_{prev} \left(i\right) X {1}^{{n}_{i}}\end{matrix}$ wherein, 1 *nᵢ* represents a *nᵢ*-dimension vector of all ones. Here, *Maskₚᵣₑᵥ* ∈ {0, 1} *n,* where its values are one only when *GTₚᵣₑᵥ (i)* is one, i.e., the child nodes to the correct node in the previous level. This is then multiplied with the classification layer to make all irrelevant logits to zero and the relevant part to retain their values. After multiplication, this is used as the predicted logit vector for loss computation, thereby restricting the model to learning only using the relevant classes.

At the next step 406 of the processor-implemented method 400, the one or more hardware processors 108 are configured by the programmed instructions to extract a first set of visual information of the at least one image using the trained at least one set of convolutional and pooling layers. Wherein, the first set of visual information corresponds to a first hierarchical level information.

At the next step 408 of the processor-implemented method 400, the one or more hardware processors 108 are configured by the programmed instructions to classify the extracted first set of visual information of the at least one image into the first level hierarchical information using a set of fully connected layers of a convolution neural network. The weights of the set of convolutional layers are frozen for each hierarchical level.

At the next step 410 of the processor-implemented method 400, the one or more hardware processors 108 are configured by the programmed instructions to extract a second set of visual information of the at least one image using the trained at least one set of convolutional and pooling layers. The second set of visual information corresponds to a second hierarchical level information.

At the next step 412 of the processor-implemented method 400, the one or more hardware processors 108 are configured by the programmed instructions to passing the first level visual information and the extracted second set of visual information of the at least one image to a set of fully connected layers of a convolution neural network and a logit masking strategy to obtain the second level hierarchical information. The predefined logit masking strategy addresses label inconsistency by hiding irrelevant classes based on the first level hierarchical information to obtain the second hierarchical level information.

While incorporating the logit masking strategy, the system 100 hypothesizes that a different model for each class in training level is not needed since logit masking can mimic the behaviour. To validate this, ablation study experiments are run by using multiple models in each level with or without global representation and using logit masking in full-shot and few-shot scenario (TP₂ and TP₄ in Table 1). The results validate said hypothesis that using multiple models for each level is not improving performance. Rather, the training loss converges very fast while testing result is less than the disclosed technique, signifying overfitting.

**Table 1**

| Training Protocol | Logit Mask | Full-shot Dataset | | | Few-shot Dataset | | |
|---|---|---|---|---|---|---|---|
| | | L1 Acc. | L2 Acc. | L3 Acc. | L1 Acc. | L2 Acc. | L3 Acc. |
| TP 1 | No | 98.68 | 92.17 | 70.62 | 83.47 | 60.51 | 32.09 |
| TP 1 | Yes | 98.68 | 92.67 | 76.49 | 83.47 | 63.84 | 36.83 |
| TP 2 | No | 98.68 | 91.56 | 68.79 | 83.47 | 59.25 | 32.16 |
| TP 2 | Yes | 98.68 | 92.52 | 75.71 | 83.47 | 62.18 | 35.45 |
| TP 3 | No | 98.50 | 90.96 | 67.73 | 72.86 | 53.86 | 24.15 |
| TP 3 | Yes | 97.48 | 91.41 | 74.50 | 78.45 | 55.79 | 26.89 |
| TP 4 | No | 98.68 | 91.60 | 68.51 | 83.47 | 60.89 | 31.25 |
| TP 4 | Yes | 98.68 | 92.54 | 74.29 | 83.47 | 62.54 | 35.95 |
| PMTL | No | 98.68 | 91.79 | 70.12 | 83.47 | 61.56 | 33.84 |
| PMTL | Yes | 98.68 | 93.05 | 77.30 | 83.47 | 65.18 | 39.37 |

At the next step 414 of the processor-implemented method 400, the one or more hardware processors 108 are configured by the programmed instructions to extract a third set of visual information of the at least one image using the trained at least one set of convolutional and pooling layers. The third set of visual information corresponds to a third hierarchical level information.

At the step 416 of the processor-implemented method 400, the one or more hardware processors 108 are configured by the programmed instructions to passing the first level visual information, the second level visual information and the extracted third set of visual information of the at least one image to a set of fully connected layers of a convolution neural network and a predefined logit masking strategy to obtain the third level hierarchical information.

Finally, at the last step 418 of the processor-implemented method 400, the one or more hardware processors 108 are configured by the programmed instructions to create a taxonomy using the obtained first level visual information, the second level visual information and the third level hierarchical information to facilitate hierarchical labelling of the predefined article for an automatic arrangement.

The PMTL is also designed to perform hierarchical taxonomy classification irrespective of dataset size. To analyze this, three full large-scale datasets are used with varied complexity and challenges. For experiment, an ImageNet-pretrained Resnet18 model is considered as a backbone for all levels. The global representation in subsequent levels is extracted from the global average pooling layer of Resnet-18 model of the predecessor level. In classification layers, two dense layers are used of size 128 and number of classes, respectively.

The crucial part of few-shot learning is the training scheme, which is able to generalize well with very less number of instances per class. The performance of PMTL in Prototypical network is observed, which is regarded as a standard few-shot learning method. Contrary to Resnet-18, prototypical networks produce embeddings for each image, and the prototype is created as the average embedding of all images from the same class in support set. The embedding of an unseen image is compared with the prototypes and the class corresponding to the prototype having minimum distance from the embedding of the unseen image is considered to be the predicted class. The output embedding of the model in previous level is considered as the global representation for the model in training level.

In few-shot learning using prototypical network, there is one modification in logit masking strategy, which sets it apart from full-shot training. In full-shot training, maximum similarity is sought and hence mask irrelevant logits with zero. However, in prototypical networks, the minimum distance is sought. Hence, the system needs to mask the irrelevant logit with a large value, preferably more than maximum value out of all distances from prototype. This can be done by replacing zeros to this high value after logit masking.

Hierarchical fashion taxonomy classification deals with large number of classes and correct prediction of each of them is necessary for creating correct taxonomy for fashion products. Hence, class specific performance is crucial to analyze rather than only checking overall performance. For this, class-specific performance of the disclosed method is preferred for Deep Fashion dataset for all levels with the state-of-the-art methods. The comparison for full-shot and few-shot setups is given in Tables 2 and 3, respectively. From these results, it is observed that all baselines mostly perform inferior to the disclosed PMTL framework. Also, it should be noted that all these methods sometimes perform well for a class and perform very poorly for other classes in that level, e.g., Concat-Net gave wrong prediction for all 'Male' classes, however, giving 99.68% for 'Female' class in Table 2. On the contrary, the disclosed method gives consistent performance across all categories. Therefore, it can be considered to be more reliable compared to other state-of-the-art methods.

**Table 2**

| Class | HierC | Add-Net | Concat-Net | HiMulConE | PMTL |
|---|---|---|---|---|---|
| | | Level 1 Classes | | | |
| Male | 16.76 | 6.51 | 0.0 | 48.37 | 93.58 |
| Female | 94.57 | 99.58 | 99.68 | 99.36 | 99.64 |

| Level 2 Classes | | | | | |
|---|---|---|---|---|---|
| Male Upper | 4.18 | 11.93 | 0.0 | 53.32 | 96.37 |
| Male Lower | 5.29 | 27.06 | 1.03 | 0.0 | 99.41 |
| Male Full body | 0.0 | 0.0 | 0.0 | 0.0 | 46.67 |
| Male Outer | 0.0 | 0.0 | 0.0 | 0.0 | 21.43 |
| Female Upper | 84.00 | 91.76 | 97.38 | 98.63 | 96.04 |
| Female Lower | 91.36 | 21.36 | 14.75 | 36.02 | 99.20 |
| Female Full body | 0.0 | 0.0 | 0.0 | 0.0 | 40.55 |
| Female Outer | 0.25 | 7.16 | 0.0 | 0.0 | 89.07 |

| Level 3 Classes | | | | | |
|---|---|---|---|---|---|
| Polos | 0.0 | 1.83 | 0.0 | 0.0 | 75.69 |
| Men's Hoodies | 0.0 | 0.0 | 0.0 | 0.0 | 79.70 |
| Men's Sweaters | 0.0 | 1.52 | 0.0 | 0.0 | 35.50 |
| Men's tees | 0.36 | 15.68 | 0.0 | 55.23 | 88.48 |
| Men's Denim | 0.0 | 18.35 | 0.0 | 0.0 | 34.86 |
| Men's Pants | 1.29 | 13.55 | 0.0 | 0.0 | 86.45 |
| Men's | 6.13 | 26.05 | 0.0 | 0.0 | 96.93 |
| Shorts | | | | | |
| Men's Jacket | 1.11 | 0.0 | 0.0 | 0.0 | 99.00 |
| Suit | 0.0 | 0.0 | 0.0 | 0.0 | 98.45 |
| Blouses | 5.70 | 11.27 | 0.24 | 3.96 | 79.42 |
| Cardigans | 0.0 | 0.0 | 0.0 | 0.0 | 40.70 |
| Women's Tees | 0.30 | 40.71 | 96.21 | 96.68 | 66.57 |
| Women's Sweater | 0.0 | 0.0 | 0.0 | 1.36 | 56.05 |
| Women's Hoodies | 0.0 | 0.0 | 0.0 | 0.0 | 41.00 |
| Graphic Tees | 5.6 | 2.7 | 0.0 | 0.0 | 71.51 |
| Women's Denim | 3.66 | 0.0 | 0.0 | 0.0 | 62.20 |
| Leggings | 82.35 | 0.0 | 0.0 | 0.0 | 45.86 |
| Women's Pants | 2.00 | 2.00 | 0.0 | 21.00 | 89.90 |
| Women's Shorts | 3.64 | 38.56 | 29.76 | 21.76 | 94.03 |
| Skirts | 5.21 | 2.44 | 0.0 | 0.0 | 90.23 |
| Women's Jacket | 7.30 | 0.0 | 0.0 | 0.0 | 98.00 |
| Dresses | 11.00 | 49.92 | 0.21 | 0.0 | 98.00 |
| Jumpsuit | 4.1 | 0.0 | 0.0 | 0.0 | 67.70 |

| Class | HierC | Add-Net | Concat-Net | HiMulConE | PMTL |
|---|---|---|---|---|---|
| | | Level 1 Classes | | | |
| Male | 25.19 | 0.00 | 14.00 | 27.06 | 77.75 |
| Female | 94.46 | 98.51 | 92.92 | 89.91 | 84.54 |

| Level 2 Classes | | | | | |
|---|---|---|---|---|---|
| Male Upper | 8.36 | 0.0 | 67.03 | 0.48 | 70.39 |
| Male Lower | 30.29 | 0.0 | 0.0 | 0.0 | 76.76 |

**Table 3**

| | | | | | |
|---|---|---|---|---|---|
| Male Full body | 10.00 | 0.0 | 0.0 | 0.0 | 17.78 |
| Male Outer | 0.0 | 0.0 | 0.0 | 0.0 | 35.71 |
| Female Upper | 66.17 | 99.80 | 0.0 | 46.98 | 75.45 |
| Female Lower | 12.72 | 0.0 | 8.24 | 37.48 | 72.44 |
| Female Full body | 4.40 | 0.0 | 13.94 | 0.0 | 10.09 |
| Female Outer | 25.26 | 0.0 | 0.0 | 5.49 | 37.20 |

| Level 3 Classes | | | | | |
|---|---|---|---|---|---|
| Polos | 0.48 | 0.46 | 0.0 | 0.0 | 18.35 |
| Men's Hoodies | 0.0 | 0.0 | 0.0 | 0.0 | 50.00 |
| Men's Sweaters | 11.68 | 0.0 | 0.0 | 0.0 | 27.41 |
| Men's tees | 0.12 | 0.0 | 0.0 | 5.58 | 43.35 |
| Men's Denim | 15.60 | 33.94 | 0.0 | 0.0 | 36.70 |
| Men's Pants | 0.32 | 0.0 | 74.52 | 0.0 | 23.87 |
| Men's Shorts | 24.14 | 0.0 | 0.0 | 0.0 | 62.45 |
| Men's Jacket | 6.67 | 4.44 | 0.0 | 0.0 | 98.00 |
| Suit | 0.0 | 0.0 | 0.0 | 0.0 | 97.85 |
| Blouses | 28.99 | 0.0 | 0.0 | 0.0 | 24.26 |
| Cardigans | 1.51 | 2.01 | 0.0 | 29.4 | 22.86 |
| Women's Tees | 0.0 | 0.0 | 0.0 | 0.0 | 36.75 |
| Women's Sweater | 19.46 | 0.0 | 0.0 | 0.0 | 28.71 |
| Women's Hoodies | 10.88 | 0.0 | 0.0 | 0.0 | 33.89 |
| Graphic Tees | 10.96 | 81.10 | 24.38 | 0.27 | 37.81 |
| Women's | 0.0 | 0.0 | 0.0 | 0.0 | 46.34 |
| Denim | | | | | |
| Leggings | 0.0 | 0.0 | 1.47 | 0.0 | 33.82 |
| Women's Pants | 0.0 | 0.0 | 0.0 | 0.0 | 38.81 |
| Women's Shorts | 8.91 | 0.0 | 0.0 | 0.0 | 52.63 |
| Skirts | 4.40 | 0.0 | 0.0 | 0.0 | 28.18 |
| Women's Jacket | 6.06 | 0.37 | 0.73 | 0.0 | 98.00 |
| Dresses | 23.62 | 0.50 | 0.0 | 92.06 | 36.72 |
| Jumpsuit | 3.29 | 0.0 | 0.0 | 0.0 | 72.02 |

To analyze the ability of the disclosed technique to obtain hierarchical labels, the classification performance is examined using a set of images and compare the results with the state-of-the-art methods. Here, the results are obtained using models trained on full dataset for first two sample images and next two from models trained on few-shot dataset. From the results, it is observed that the existing models are not able to get all hierarchical label correctly due to label inconsistency and error propagation problems.

For example, for third image, Concat-Net gives the taxonomy as Women → Male top-wear → Pants, which is an impossible set. Contrary to existing methods, the PMTL performs better by giving correct predictions for all labels. Similar to this, results of retrieval performance of PMTL are observed using Deep Fashion dataset. Here, two male and two female products are considered, and it is observed that the disclosed technique is able to retrieve relevant products from the gallery.

### Experiments:

For fashion taxonomy classification, DeepFashion, Shopping100k and FashionMNIST datasets are considered. DeepFashion provides fashion images worn by human models with variations in poses, occlusions, and illuminations. In the present disclosure, in-Store subset of the dataset is considered to perform taxonomy classifications using three levels: gender (male, female), clothing type (upper-wear, bottom-wear, full-body, and outer-wear) and product category (shirt, trouser, etc.). A query subset is used as a testing image for the taxonomy classification and gallery subset as retrieval gallery for similar item retrieval. Shopping100k provides fashion images with background having large variations in style. Further, similar levels are considered in DeepFashion. Fashion-MNIST provides images with smaller resolution and less variations. A three-level taxonomy is considered with level 1 having two classes (clothing, non-clothing), 6 classes for level 2 (top-wear, bottom-wear, outer-wear, one-piece, shoes, accessories) and 10 classes in level 3 as per annotations.

In another aspect, the fashion taxonomy classification for full-shot and few-shot datasets using all three datasets is disclosed. Since Shopping100k does not contain train-test split information, 60,000 images are considered for training and 40,000 images are considered for testing keeping similar image ratio in every class for partition. For few-shot training, 15 images per class is taken in level 3 and have used 6 images in support set and 4 in query set for each task. For fair comparison, all baseline models for all datasets are retrained using the dataset split same as the proposed method. To ensure consistency in backbone, ImageNet-pretrained Resnet-18 is used as backbone for all baselines and disclosed method for full-shot data. For few-shot experiments, a 4 CNN layer backbone is taken, each having 64 filters of size (3,3) followed by batch normalization, Rectifier Linear Unit (ReLU) activation and max pooling. For Fashion-MNIST, the last two max pooling layers are removed to prevent the network reducing the receptive field below kernel dimension.

The results of the disclosed method and the comparison with the state-of-the-art for DeepFashion dataset are given in Table 4. Herein, it is observed that the method significantly outperforms state of-the-art methods for most of the cases, except for L1 accuracy for few-shot learning which gives comparable performance to other few-shot models. Also, the improvement in performance of the model is disclosed more significant in finer labels (e.g., L2 and L3), since these levels require supervision from previous layers and explicit control on final labels. This shows the efficacy of the proposed training protocol and loss computation in a hierarchical setup irrespective of dataset size.

**Table 4**

| Method | Train data | Test data | L1 Acc. | L2 Acc. | L3 Acc. |
|---|---|---|---|---|---|
| HierC | Full | Full | 78.21 | 41.62 | 11.47 |
| HierC | Few-shot | Full | 83.53 | 40.37 | 10.88 |
| Add-Net | Full | Full | 84.26 | 52.14 | 24.37 |
| Add-Net | Few-shot | Full | 84.21 | 31.46 | 7.42 |
| Concat-Net | Full | Full | 84.24 | 48.81 | 21.98 |
| Concat-Net | Few-shot | Full | 83.72 | 18.41 | 6.82 |
| HiMulConE | Full | Full | 89.07 | 55.19 | 25.38 |
| HiMulConE | Few-shot | Full | 75.91 | 47.39 | 10.96 |
| PMTL | Full | Full | 98.68 | 93.05 | 77.30 |
| PMTL | Few-shot | Full | 83.47 | 65.18 | 39.37 |

A similar trend is demonstrated in Table 5, where performance of the disclosed method is compared with state-of-the-art for Shopping100k dataset.

**Table 5**

| Method | Train data | Test data | L1 Acc. | L2 Acc. | L3 Acc. |
|---|---|---|---|---|---|
| HierC | Full | Full | 55.47 | 21.53 | 20.33 |
| HierC | Few-shot | Full | 61.72 | 19.21 | 6.24 |
| Add-Net | Full | Full | 63.36 | 19.86 | 16.28 |
| Add-Net | Few-shot | Full | 63.37 | 15.72 | 9.82 |
| Concat-Net | Full | Full | 63.35 | 19.55 | 15.61 |
| Concat-Net | Few-shot | Full | 63.37 | 18.31 | 5.51 |
| HiMulConE | Full | Full | 55.90 | 19.28 | 17.59 |
| HiMulConE | Few-shot | Full | 57.11 | 14.20 | 9.01 |
| PMTL | Full | Full | 98.63 | 39.28 | 46.03 |
| PMTL | Few-shot | Full | 63.06 | 38.33 | 50.21 |

Herein, L1 accuracy of proposed model in few shots training is comparable to the state-of-the-art, however, improvements in performance for L2 and L3 are significant.

Further experiments are performed with Fashion-MNIST dataset to observe the change in performance in datasets with less variations and low resolution. From Table 6, it is observed that the performance improvement using the disclosed method is substantial, especially for levels 2 and 3. Even, the few-shot framework using the method gives comparable performance to the full-shot results of the baseline methods and significant improvement can be seen from other few-shot methods. These results for three datasets quantify the benefit of using the disclosed method for hierarchical taxonomy classification in few shot and full-shot scenario using datasets with various constraints, such as variations in human pose, object style, high inter-class similarity, etc.

**Table 6**

| Method | Train data | Test data | L1 Acc. | L2 Acc. | L3 Acc. |
|---|---|---|---|---|---|
| HierC | Full | Full | 93.17 | 88.31 | 83.74 |
| HierC | Few-shot | Full | 71.33 | 81.12 | 79.95 |
| Add-Net | Full | Full | 95.38 | 89.38 | 85.08 |
| Add-Net | Few-shot | Full | 61.31 | 45.04 | 33.64 |
| Concat-Net | Full | Full | 95.43 | 88.82 | 84.85 |
| Concat-Net | Few-shot | Full | 53.00 | 43.70 | 41.26 |
| HiMulConE | Full | Full | 99.46 | 86.05 | 88.32 |
| HiMulConE | Few-shot | Full | 60.00 | 52.14 | 40.56 |
| PMTL | Full | Full | 99.88 | 96.44 | 96.53 |
| PMTL | Few-shot | Full | 99.09 | 87.26 | 86.38 |

Similar item retrieval is a crucial application in retail e-commerce setup, where the e-commerce websites retrieve similar items based on user's search. To facilitate this, traditional deep learning methods create embeddings of each image and retrieve products having minimum difference in embedding space. However, this involves finding similarity between millions of embeddings and hence is a time-consuming and resource-exhaustive process. To circumvent this, fashion taxonomy is aided for retrieval and then embeddings are used for re-ranking after reducing the search space. The process happens in two phases, as given below: (Phase i) Retrieval: To reduce the search space for visual similarity check, the system retrieves all products from the retrieval gallery following the same taxonomy as the query product. This results in a set of products having the same taxonomy but a fraction of retrieval gallery in number. (Phase ii) Re-ranking: Although all the retrieved products follow the same taxonomy and hence are similar, some of them should be visually more similar than others and should be shown to the user before other products which are visually less similar. To facilitate this, the system re-ranks the order of the products based on their visual similarity using their embeddings.

In Table 7, the retrieval results are tabulated for Deep Fashion using the disclosed method and it is compared with the state-of-the-art. From the results, it is observed that the PMTL framework significantly outperformed all the existing methods for both full data and few-shot data training. Also, the performance is similar for full data and few-shot data, thus reinstating the generalizability of the disclosed method.

**Table 7**

| Method | Full Data | | Few-shot Data | |
|---|---|---|---|---|
| | Top-10 Accuracy | NDCG@10 | Top-10 Accuracy | NDCG@10 |
| HierC | 32.57 | 73.72 | 32.46 | 72.70 |
| Add-Net | 27.49 | 68.24 | 27.12 | 66.89 |
| Concat-Net | 28.92 | 70.53 | 25.09 | 65.16 |
| HiMulConE | 35.25 | 71.86 | 28.51 | 69.45 |
| PMTL | 58.48 | 75.03 | 58.25 | 74.57 |

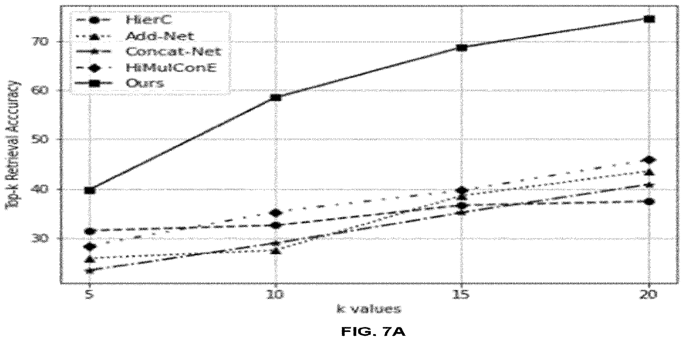

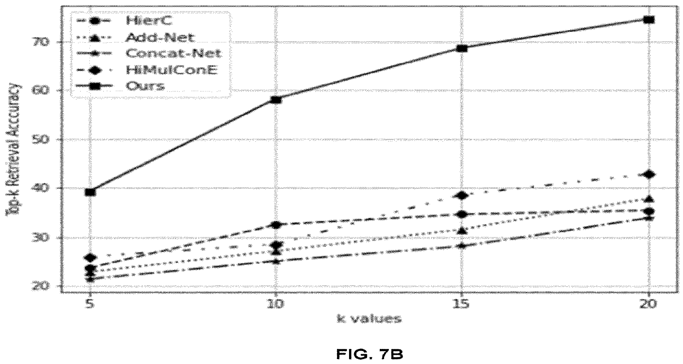

The trend is similar with the variations of number of retrieved products for few-shot and full dataset, as shown in FIGS. 7A and 7B. It is also observed that the large performance difference between the proposed method and other baselines. From this, It can be concluded that the disclosed method consistently outperformed existing methods by a large margin irrespective of number of retrieved items and dataset size.

The written description describes the subject matter herein to enable any person skilled in the art to make and use the embodiments. The scope of the subject matter embodiments is defined by the

The embodiments of present disclosure herein address unresolved problem of label inconsistency, where outputs of different levels create an impossible combination, and error propagation from previous level outputs can significantly impact its performance. Also, existing hierarchical taxonomy classification frameworks are suited for large-scale datasets, and they are not directly applicable to few-shot datasets, given the existing training strategy.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (400) comprising:
collecting (402), via an Input/Output (I/O) interface, at least one image of a predefined article;
training progressively (404) using cumulative global representation, via one or more hardware processors, at least one set of convolutional and pooling layers using the collected at least one image based on a back propagation technique, wherein predecessor level ground truth is used as an input during training by masking a part of a logit and using remaining part of the logit for training and wherein an output predecessor level is considered as the global representation in each training level and wherein the global representation from previous level is augmented to obtain label-wise constraint from the previous level;
extracting (406), via the one or more hardware processors, a first set of visual information of the at least one image using the trained at least one set of convolutional and pooling layers, wherein the first set of visual information pertains to a first hierarchical level information and wherein the global representation in subsequent levels is extracted from a global average pooling layer of the predecessor level;
classifying (408), via the one or more hardware processors, the extracted first set of visual information of the at least one image into a first level hierarchical information using a set of fully connected layers of a convolution neural network, wherein weights of the set of convolutional layers are freezed for each hierarchical level;
extracting (410), via the one or more hardware processors, a second set of visual information of the at least one image using the trained set of convolutional and pooling layers, wherein the second set of visual information pertains to a second hierarchical level information;
passing (412), via the one or more hardware processors, the first set of visual information and the second set of visual information of the at least one image to the set of fully connected layers of a convolution neural network and a predefined logit masking strategy to obtain a second level hierarchical information, wherein the logit masking strategy addresses a label inconsistency by hiding one or more irrelevant classes based on the first level hierarchical information to obtain the second hierarchical level information, wherein logit masking mimics behaviour of training of each class in each training level;
extracting (414), via the one or more hardware processors, a third set of visual information of the at least one image using the trained set of convolutional and pooling layers;
passing (416), via the one or more hardware processors, the first set of visual information, the second set of visual information and the third set of visual information of the at least one image to the set of fully connected layers of a convolution neural network and a predefined logit masking strategy to obtain a third level hierarchical information; and
creating (418), via the one or more hardware processors, a taxonomy using the first level hierarchical information, the second level hierarchical information and the third level hierarchical information to facilitate hierarchical labelling of the predefined article.

2. The processor-implemented method (400) as claimed in claim 1, wherein the convolution neural network is trained progressively to nth level by considering visual information from a first level to (n-1) levels.

3. The processor-implemented method (400) as claimed in claim 2, wherein progressive training comprises:
a root node training, wherein the convolution neural network is trained independently using a cross-entropy loss; and
fusing a visual information of a predecessor taxonomy level to the visual information at that level, wherein during fusing the visual information of the predecessor taxonomy level, one or more weights of the set of convolutional layers of the predecessor taxonomy level are freezed to prevent aligning weight to a new task using labels of a new level.

4. A system (100) comprising:
a memory (110) storing instructions;
one or more Input/Output (I/O) interfaces (104); and
one or more hardware processors (108) coupled to the memory (110) via the one or more I/O interfaces (104), wherein the one or more hardware processors (108) are configured by the instructions to:
collect at least one image of a predefined article;
train progressively using cumulative global representation, at least one set of convolutional and pooling layers using the collected at least one image based on a back propagation technique, wherein predecessor level ground truth is used as an input during training by masking a part of a logit and using remaining part of the logit for training and wherein an output predecessor level is considered as the global representation in each training level and wherein the global representation from previous level is augmented to obtain label-wise constraint from the previous level;
extract a first set of visual information of the at least one image using the trained at least one set of convolutional and pooling layers, wherein the first set of visual information pertains to a first hierarchical level information and wherein the global representation in subsequent levels is extracted from a global average pooling layer of the predecessor level;
classify the extracted first set of visual information of the at least one image into a first level hierarchical information using a set of fully connected layers of a convolution neural network, wherein weights of the set of convolutional layers are freezed for each hierarchical level;
extract a second set of visual information of the at least one image using the trained set of convolutional and pooling layers, wherein the second set of visual information pertains to a second hierarchical level information;
passing the first set of visual information and the second set of visual information of the at least one image to the set of fully connected layers of a convolution neural network and a predefined logit masking strategy to obtain a second level hierarchical information, wherein the logit masking strategy addresses a label inconsistency by hiding one or more irrelevant classes based on the first level hierarchical information to obtain the second hierarchical level information, wherein logit masking mimics behaviour of training of each class in each training level;
extract a third set of visual information of the at least one image using the trained set of convolutional and pooling layers;
passing the first set of visual information, the second set of visual information and the third set of visual information of the at least one image to the set of fully connected layers of a convolution neural network and a predefined logit masking strategy to obtain a third level hierarchical information; and
create a taxonomy using the first level hierarchical information, the second level hierarchical information and the third level hierarchical information to facilitate hierarchical labelling of the predefined article.

5. The system (100) as claimed in claim 4, wherein the convolution neural network is trained progressively to nth level by considering visual information from first level to (n-1) levels.

6. The system (100) as claimed in claim 5, wherein the progressive training comprises:
a root node training, wherein the convolution neural network is trained independently using a cross-entropy loss; and
fusing a visual information of the predecessor taxonomy level to the visual information at that level, wherein fusing the visual information of the predecessor taxonomy level, one or more weights of the set of convolutional layers of the predecessor taxonomy level are freezed to prevent aligning weight to new task using labels of a new level.

7. One or more non-transitory machine-readable information storage mediums comprising one or more instructions which when executed by one or more hardware processors cause:
collecting, via an Input/Output (I/O) interface, at least one image of a predefined article;
training progressively using cumulative global representation at least one set of convolutional and pooling layers using the collected at least one image based on a back propagation technique, wherein predecessor level ground truth is used as an input during training by masking a part of a logit and using remaining part of the logit for training and wherein an output predecessor level is considered as the global representation in each training level and wherein the global representation from previous level is augmented to obtain label-wise constraint from the previous level;
extracting a first set of visual information of the at least one image using the trained at least one set of convolutional and pooling layers, wherein the first set of visual information pertains to a first hierarchical level information and wherein the global representation in subsequent levels is extracted from a global average pooling layer of the predecessor level;
classifying the extracted first set of visual information of the at least one image into a first level hierarchical information using a set of fully connected layers of a convolution neural network, wherein weights of the set of convolutional layers are freezed for each hierarchical level;
extracting a second set of visual information of the at least one image using the trained set of convolutional and pooling layers, wherein the second set of visual information pertains to a second hierarchical level information;
passing the first set of visual information and the second set of visual information of the at least one image to the set of fully connected layers of a convolution neural network and a predefined logit masking strategy to obtain a second level hierarchical information, wherein the logit masking strategy addresses a label inconsistency by hiding one or more irrelevant classes based on the first level hierarchical information to obtain the second hierarchical level information, wherein logit masking mimics behaviour of training of each class in each training level;
extracting a third set of visual information of the at least one image using the trained set of convolutional and pooling layers;
passing the first set of visual information, the second **s**et of visual information and the third set of visual information of the at least one image to the set of fully connected layers of a convolution neural network and a predefined logit masking strategy to obtain a third level hierarchical information; and
creating a taxonomy using the first level hierarchical information, the second level hierarchical information and the third level hierarchical information to facilitate hierarchical labelling of the predefined article.

8. The one or more non-transitory machine-readable information storage mediums of claim 7, wherein the convolution neural network is trained progressively to nth level by considering visual information from a first level to (n-1) levels.

9. The one or more non-transitory machine-readable information storage mediums of claim 8, wherein progressive training comprises:
a root node training, wherein the convolution neural network is trained independently using a cross-entropy loss; and
fusing a visual information of a predecessor taxonomy level to the visual information at that level, wherein during fusing the visual information of the predecessor taxonomy level, one or more weights of the set of convolutional layers of the predecessor taxonomy level are freezed to prevent aligning weight to a new task using labels of a new level.

## Patentansprüche

1. Prozessorimplementiertes Verfahren (400), umfassend:
Sammeln (402), über eine Eingabe/Ausgabe(I/O)-Schnittstelle, mindestens eines Bildes eines vordefinierten Artikels;
fortschreitendes Trainieren (404), unter Verwendung einer kumulativen globalen Darstellung, über einen oder mehrere Hardwareprozessoren, mindestens eines Satzes von Faltungs- und Pooling-Schichten unter Verwendung des gesammelten mindestens einen Bildes basierend auf einer Rückpropagationstechnik, wobei die Grundwahrheit der Vorgängerebene als eine Eingabe während des Trainings verwendet wird, indem ein Teil eines Protokolls maskiert wird und der verbleibende Teil des Protokolls zum Training verwendet wird, und wobei eine Ausgangsvorgängerebene als die globale Darstellung in jeder Trainingsebene betrachtet wird und wobei die globale Darstellung von der vorherigen Ebene erweitert wird, um eine kennzeichnungsweise Einschränkung von der vorherigen Ebene zu erhalten;
Extrahieren (406), über den einen oder die mehreren Hardwareprozessoren, eines ersten Satzes von visuellen Informationen des mindestens einen Bildes unter Verwendung des trainierten mindestens einen Satzes von Faltungs- und Pooling-Schichten, wobei der erste Satz von visuellen Informationen Informationen einer ersten hierarchischen Ebene betrifft und wobei die globale Darstellung in nachfolgenden Ebenen aus einer globalen durchschnittlichen Pooling-Schicht der Vorgängerebene extrahiert wird;
Klassifizieren (408), über den einen oder die mehreren Hardwareprozessoren, des extrahierten ersten Satzes von visuellen Informationen des mindestens einen Bildes in hierarchische Informationen einer ersten Ebene unter Verwendung eines Satzes von vollständig verbundenen Schichten eines neuronalen Faltungsnetzwerks, wobei Gewichte des Satzes von Faltungsschichten für jede hierarchische Ebene eingefroren werden;
Extrahieren (410), über den einen oder die mehreren Hardwareprozessoren, eines zweiten Satzes von visuellen Informationen des mindestens einen Bildes unter Verwendung des trainierten Satzes von Faltungs- und Pooling-Schichten, wobei der zweite Satz von visuellen Informationen Informationen einer zweiten hierarchischen Ebene betrifft;
Übergeben (412), über den einen oder die mehreren Hardwareprozessoren, des ersten Satzes von visuellen Informationen und des zweiten Satzes von visuellen Informationen des mindestens einen Bildes an den Satz von vollständig verbundenen Schichten eines neuronalen Faltungsnetzwerks und eine vordefinierte Protokollmaskierungsstrategie, um hierarchische Informationen einer zweiten Ebene zu erhalten, wobei die Protokollmaskierungsstrategie eine Kennzeichnungsinkonsistenz durch Verbergen einer oder mehrerer irrelevanter Klassen basierend auf den hierarchischen Informationen der ersten Ebene angeht, um die Informationen der zweiten hierarchischen Ebene zu erhalten, wobei die Protokollmaskierung das Verhalten des Trainings jeder Klasse in jeder Trainingsebene nachahmt;
Extrahieren (414), über den einen oder die mehreren Hardwareprozessoren, eines dritten Satzes von visuellen Informationen des mindestens einen Bildes unter Verwendung des trainierten Satzes von Faltungs- und Pooling-Schichten;
Übergeben (416), über den einen oder die mehreren Hardwareprozessoren, des ersten Satzes von visuellen Informationen, des zweiten Satzes von visuellen Informationen und des dritten Satzes von visuellen Informationen des mindestens einen Bildes an den Satz von vollständig verbundenen Schichten eines neuronalen Faltungsnetzwerks und eine vordefinierte Protokollmaskierungsstrategie, um hierarchische Informationen einer dritten Ebene zu erhalten; und
Erzeugen (418), über den einen oder die mehreren Hardwareprozessoren, einer Taxonomie unter Verwendung der hierarchischen Informationen der ersten Ebene, der hierarchischen Informationen der zweiten Ebene und der hierarchischen Informationen der dritten Ebene, um die hierarchische Kennzeichnung des vordefinierten Artikels zu erleichtern.

2. Prozessorimplementiertes Verfahren (400) nach Anspruch 1, wobei das neuronale Faltungsnetzwerk progressiv auf die n-te Ebene trainiert wird, indem visuelle Informationen von einer ersten Ebene auf (n-1) Ebenen berücksichtigt werden.

3. Prozessorimplementiertes Verfahren (400) nach Anspruch 2, wobei das progressive Training umfasst:
ein Wurzelknotentraining, wobei das neuronale Faltungsnetzwerk unabhängig unter Verwendung eines Kreuzentropieverlusts trainiert wird; und
Zusammenführen von visuellen Informationen einer Vorgängertaxonomieebene mit den visuellen Informationen auf dieser Ebene, wobei während des Zusammenführens der visuellen Informationen der Vorgängertaxonomieebene ein oder mehrere Gewichte des Satzes von Faltungsschichten der Vorgängertaxonomieebene eingefroren werden, um zu verhindern, dass das Gewicht unter Verwendung von Kennzeichnungen einer neuen Ebene mit einer neuen Aufgabe ausgerichtet wird.

4. System (100), umfassend:
einen Speicher (110), der Anweisungen speichert;
eine oder mehrere Eingabe/Ausgabe(I/O)-Schnittstellen (104); und
einen oder mehrere Hardwareprozessoren (108), die über die eine oder die mehreren I/O-Schnittstellen (104) mit dem Speicher (110) gekoppelt sind, wobei der eine oder die mehreren Hardwareprozessoren (108) durch die Anweisungen konfiguriert sind zum:
Sammeln mindestens eines Bildes eines vordefinierten Artikels;
fortschreitendes Trainieren, unter Verwendung einer kumulativen globalen Darstellung, mindestens eines Satzes von Faltungs- und Pooling-Schichten unter Verwendung des gesammelten mindestens einen Bildes basierend auf einer Rückpropagationstechnik, wobei die Grundwahrheit der Vorgängerebene als eine Eingabe während des Trainings verwendet wird, indem ein Teil eines Protokolls maskiert wird und der verbleibende Teil des Protokolls zum Training verwendet wird, und wobei eine Ausgangsvorgängerebene als die globale Darstellung in jeder Trainingsebene betrachtet wird und wobei die globale Darstellung von der vorherigen Ebene erweitert wird, um eine kennzeichnungsweise Einschränkung von der vorherigen Ebene zu erhalten;
Extrahieren eines ersten Satzes von visuellen Informationen des mindestens einen Bildes unter Verwendung des trainierten mindestens einen Satzes von Faltungs- und Pooling-Schichten, wobei der erste Satz von visuellen Informationen Informationen einer ersten hierarchischen Ebene betrifft und wobei die globale Darstellung in nachfolgenden Ebenen aus einer globalen durchschnittlichen Pooling-Schicht der Vorgängerebene extrahiert wird;
Klassifizieren des extrahierten ersten Satzes von visuellen Informationen des mindestens einen Bildes in hierarchische Informationen einer ersten Ebene unter Verwendung eines Satzes von vollständig verbundenen Schichten eines neuronalen Faltungsnetzwerks, wobei Gewichte des Satzes von Faltungsschichten für jede hierarchische Ebene eingefroren werden;
Extrahieren eines zweiten Satzes von visuellen Informationen des mindestens einen Bildes unter Verwendung des trainierten Satzes von Faltungs- und Pooling-Schichten, wobei der zweite Satz von visuellen Informationen Informationen einer zweiten hierarchischen Ebene betrifft;
Übergeben des ersten Satzes von visuellen Informationen und des zweiten Satzes von visuellen Informationen des mindestens einen Bildes an den Satz von vollständig verbundenen Schichten eines neuronalen Faltungsnetzwerks und eine vordefinierte Protokollmaskierungsstrategie, um hierarchische Informationen einer zweiten Ebene zu erhalten, wobei die Protokollmaskierungsstrategie eine Kennzeichnungsinkonsistenz durch Verbergen einer oder mehrerer irrelevanter Klassen basierend auf den hierarchischen Informationen der ersten Ebene angeht, um die Informationen der zweiten hierarchischen Ebene zu erhalten, wobei die Protokollmaskierung das Verhalten des Trainings jeder Klasse in jeder Trainingsebene nachahmt;
Extrahieren eines dritten Satzes von visuellen Informationen des mindestens einen Bildes unter Verwendung des trainierten Satzes von Faltungs- und Pooling-Schichten;
Übergeben des ersten Satzes von visuellen Informationen, des zweiten Satzes von visuellen Informationen und des dritten Satzes von visuellen Informationen des mindestens einen Bildes an den Satz von vollständig verbundenen Schichten eines neuronalen Faltungsnetzwerks und eine vordefinierte Protokollmaskierungsstrategie, um hierarchische Informationen einer dritten Ebene zu erhalten; und
Erzeugen einer Taxonomie unter Verwendung der hierarchischen Informationen der ersten Ebene, der hierarchischen Informationen der zweiten Ebene und der hierarchischen Informationen der dritten Ebene, um die hierarchische Kennzeichnung des vordefinierten Artikels zu erleichtern.

5. System (100) nach Anspruch 4, wobei das neuronale Faltungsnetzwerk progressiv auf die n-te Ebene trainiert wird, indem visuelle Informationen von einer ersten Ebene auf (n-1) Ebenen berücksichtigt werden.

6. System (100) nach Anspruch 5, wobei das progressive Training umfasst:
ein Wurzelknotentraining, wobei das neuronale Faltungsnetzwerk unabhängig unter Verwendung eines Kreuzentropieverlusts trainiert wird; und
Zusammenführen von visuellen Informationen der Vorgängertaxonomieebene mit den visuellen Informationen auf dieser Ebene, wobei beim Zusammenführen der visuellen Informationen der Vorgängertaxonomieebene ein oder mehrere Gewichte des Satzes von Faltungsschichten der Vorgängertaxonomieebene eingefroren werden, um zu verhindern, dass das Gewicht unter Verwendung von Kennzeichnungen einer neuen Ebene mit einer neuen Aufgabe ausgerichtet wird.

7. Ein oder mehrere nichtflüchtige maschinenlesbare Informationsspeichermedien, die eine oder mehrere Anweisungen umfassen, die bei Ausführung durch einen oder mehrere Hardwareprozessoren bewirken:
Sammeln, über eine Eingabe/Ausgabe(I/O)-Schnittstelle, mindestens eines Bildes eines vordefinierten Artikels;
fortschreitendes Trainieren, unter Verwendung einer kumulativen globalen Darstellung, mindestens eines Satzes von Faltungs- und Pooling-Schichten unter Verwendung des gesammelten mindestens einen Bildes basierend auf einer Rückpropagationstechnik, wobei die Grundwahrheit der Vorgängerebene als eine Eingabe während des Trainings verwendet wird, indem ein Teil eines Protokolls maskiert wird und der verbleibende Teil des Protokolls zum Training verwendet wird, und wobei eine Ausgangsvorgängerebene als die globale Darstellung in jeder Trainingsebene betrachtet wird und wobei die globale Darstellung von der vorherigen Ebene erweitert wird, um eine kennzeichnungsweise Einschränkung von der vorherigen Ebene zu erhalten;
Extrahieren eines ersten Satzes von visuellen Informationen des mindestens einen Bildes unter Verwendung des trainierten mindestens einen Satzes von Faltungs- und Pooling-Schichten, wobei der erste Satz von visuellen Informationen Informationen einer ersten hierarchischen Ebene betrifft und wobei die globale Darstellung in nachfolgenden Ebenen aus einer globalen durchschnittlichen Pooling-Schicht der Vorgängerebene extrahiert wird;
Klassifizieren des extrahierten ersten Satzes von visuellen Informationen des mindestens einen Bildes in hierarchische Informationen einer ersten Ebene unter Verwendung eines Satzes von vollständig verbundenen Schichten eines neuronalen Faltungsnetzwerks, wobei Gewichte des Satzes von Faltungsschichten für jede hierarchische Ebene eingefroren werden;
Extrahieren eines zweiten Satzes von visuellen Informationen des mindestens einen Bildes unter Verwendung des trainierten Satzes von Faltungs- und Pooling-Schichten, wobei der zweite Satz von visuellen Informationen Informationen einer zweiten hierarchischen Ebene betrifft;
Übergeben des ersten Satzes von visuellen Informationen und des zweiten Satzes von visuellen Informationen des mindestens einen Bildes an den Satz von vollständig verbundenen Schichten eines neuronalen Faltungsnetzwerks und eine vordefinierte Protokollmaskierungsstrategie, um hierarchische Informationen einer zweiten Ebene zu erhalten, wobei die Protokollmaskierungsstrategie eine Kennzeichnungsinkonsistenz durch Verbergen einer oder mehrerer irrelevanter Klassen basierend auf den hierarchischen Informationen der ersten Ebene angeht, um die Informationen der zweiten hierarchischen Ebene zu erhalten, wobei die Protokollmaskierung das Verhalten des Trainings jeder Klasse in jeder Trainingsebene nachahmt;
Extrahieren eines dritten Satzes von visuellen Informationen des mindestens einen Bildes unter Verwendung des trainierten Satzes von Faltungs- und Pooling-Schichten;
Übergeben des ersten Satzes von visuellen Informationen, des zweiten Satzes von visuellen Informationen und des dritten Satzes von visuellen Informationen des mindestens einen Bildes an den Satz von vollständig verbundenen Schichten eines neuronalen Faltungsnetzwerks und eine vordefinierte Protokollmaskierungsstrategie, um hierarchische Informationen einer dritten Ebene zu erhalten; und
Erzeugen einer Taxonomie unter Verwendung der hierarchischen Informationen der ersten Ebene, der hierarchischen Informationen der zweiten Ebene und der hierarchischen Informationen der dritten Ebene, um die hierarchische Kennzeichnung des vordefinierten Artikels zu erleichtern.

8. Ein oder mehrere nichtflüchtige maschinenlesbare Informationsspeichermedien nach Anspruch 7, wobei das neuronale Faltungsnetzwerk progressiv auf die n-te Ebene trainiert wird, indem visuelle Informationen von einer ersten Ebene auf (n-1) Ebenen berücksichtigt werden.

9. Ein oder mehrere nichtflüchtige maschinenlesbare Informationsspeichermedien nach Anspruch 8, wobei das progressive Training umfasst:
ein Wurzelknotentraining, wobei das neuronale Faltungsnetzwerk unabhängig unter Verwendung eines Kreuzentropieverlusts trainiert wird; und
Zusammenführen von visuellen Informationen einer Vorgängertaxonomieebene mit den visuellen Informationen auf dieser Ebene, wobei während des Zusammenführens der visuellen Informationen der Vorgängertaxonomieebene ein oder mehrere Gewichte des Satzes von Faltungsschichten der Vorgängertaxonomieebene eingefroren werden, um zu verhindern, dass das Gewicht unter Verwendung von Kennzeichnungen einer neuen Ebene mit einer neuen Aufgabe ausgerichtet wird.

## Revendications

1. Procédé mis en œuvre par processeur (400) comprenant :
la collecte (402), via une interface d'entrée/sortie (E/S), d'au moins une image d'un article prédéfini ;
l'apprentissage progressif (404) à l'aide d'une représentation globale cumulative, via un ou plusieurs processeurs matériels, d'au moins un ensemble de couches de convolution et de regroupement à l'aide de l'au moins une image collectée sur la base d'une technique de rétropropagation, dans lequel une vérité de terrain de niveau prédécesseur est utilisée comme entrée pendant un apprentissage en masquant une partie d'un logit et en utilisant une partie restante du logit pour un apprentissage et dans lequel la sortie du niveau prédécesseur est considérée comme la représentation globale dans chaque niveau d'apprentissage et dans lequel la représentation globale à partir d'un niveau précédent est augmentée pour obtenir une contrainte par étiquette à partir du niveau précédent ;
l'extraction (406), via les un ou plusieurs processeurs matériels, d'un premier ensemble d'informations visuelles de l'au moins une image à l'aide de l'au moins un ensemble appris de couches de convolution et de regroupement, dans lequel le premier ensemble d'informations visuelles se rapporte à des informations de premier niveau hiérarchique et dans lequel la représentation globale dans des niveaux ultérieurs est extraite à partir d'une couche de regroupement moyenne globale du niveau prédécesseur;
la classification (408), via les un ou plusieurs processeurs matériels, du premier ensemble d'informations visuelles extrait de l'au moins une image en des informations hiérarchiques de premier niveau à l'aide d'un ensemble de couches entièrement connectées d'un réseau neuronal convolutif, dans lequel des poids de l'ensemble de couches de convolution sont gelés pour chaque niveau hiérarchique ;
l'extraction (410), via les un ou plusieurs processeurs matériels, d'un deuxième ensemble d'informations visuelles de l'au moins une image à l'aide de l'ensemble appris de couches de convolution et de regroupement, dans lequel le deuxième ensemble d'informations visuelles se rapporte à des informations de deuxième niveau hiérarchique ;
le passage (412), via les un ou plusieurs processeurs matériels, du premier ensemble d'informations visuelles et du deuxième ensemble d'informations visuelles de l'au moins une image à l'ensemble de couches entièrement connectées d'un réseau neuronal convolutif et à une stratégie de masquage de logit prédéfinie pour obtenir des informations hiérarchiques de deuxième niveau, dans lequel la stratégie de masquage de logit s'attaque à une incohérence d'étiquette en masquant une ou plusieurs classes non pertinentes sur la base des informations hiérarchiques de premier niveau pour obtenir les informations de deuxième niveau hiérarchique, dans lequel un masquage de logit imite un comportement d'apprentissage de chaque classe dans chaque niveau d'apprentissage ;
l'extraction (414), via les un ou plusieurs processeurs matériels, d'un troisième ensemble d'informations visuelles de l'au moins une image à l'aide de l'ensemble appris de couches de convolution et de regroupement ;
le passage (416), via les un ou plusieurs processeurs matériels, du premier ensemble d'informations visuelles, du deuxième ensemble d'informations visuelles et du troisième ensemble d'informations visuelles de l'au moins une image à l'ensemble de couches entièrement connectées d'un réseau neuronal convolutif et à une stratégie de masquage de logit prédéfinie pour obtenir des informations hiérarchiques de troisième niveau ; et
la création (418), via les un ou plusieurs processeurs matériels, d'une taxonomie à l'aide des informations hiérarchiques de premier niveau, des informations hiérarchiques de deuxième niveau et des informations hiérarchiques de troisième niveau pour faciliter un étiquetage hiérarchique de l'article prédéfini.

2. Procédé mis en œuvre par processeur (400) selon la revendication 1, dans lequel le réseau neuronal convolutif est appris progressivement au nième niveau en considérant des informations visuelles d'un premier niveau à (n-1) niveaux.

3. Procédé mis en œuvre par processeur (400) selon la revendication 2, dans lequel un apprentissage progressif comprend :
un apprentissage de noeud racine, dans lequel le réseau neuronal convolutif est appris indépendamment à l'aide d'une perte d'entropie croisée ; et
la fusion d'informations visuelles d'un niveau de taxonomie prédécesseur aux informations visuelles à ce niveau, dans lequel pendant la fusion des informations visuelles du niveau de taxonomie prédécesseur, un ou plusieurs poids de l'ensemble de couches de convolution du niveau de taxonomie prédécesseur sont gelés pour empêcher un alignement de poids sur une nouvelle tâche à l'aide d'étiquettes d'un nouveau niveau.

4. Système (100) comprenant :
une mémoire (110) stockant des instructions ;
une ou plusieurs interfaces d'entrée/sortie (E/S) (104) ; et
un ou plusieurs processeurs matériels (108) couplés à la mémoire (110) via les une ou plusieurs interfaces E/S (104), dans lequel les un ou plusieurs processeurs matériels (108) sont configurés par les instructions pour :
la collecte d'au moins une image d'un article prédéfini ;
l'apprentissage progressif à l'aide d'une représentation globale cumulative, d'au moins un ensemble de couches de convolution et de regroupement à l'aide de l'au moins une image collectée sur la base d'une technique de rétropropagation, dans lequel une vérité de terrain de niveau prédécesseur est utilisée comme entrée pendant un apprentissage en masquant une partie d'un logit et en utilisant une partie restante du logit pour un apprentissage et dans lequel la sortie du niveau prédécesseur est considérée comme la représentation globale dans chaque niveau d'apprentissage et dans lequel la représentation globale à partir d'un niveau précédent est augmentée pour obtenir une contrainte par étiquette à partir du niveau précédent ;
l'extraction d'un premier ensemble d'informations visuelles de l'au moins une image à l'aide de l'au moins un ensemble appris de couches de convolution et de regroupement, dans lequel le premier ensemble d'informations visuelles se rapporte à des informations de premier niveau hiérarchique et dans lequel la représentation globale dans des niveaux ultérieurs est extraite à partir d'une couche de regroupement moyenne globale du niveau prédécesseur ;
la classification du premier ensemble d'informations visuelles extrait de l'au moins une image en des informations hiérarchiques de premier niveau à l'aide d'un ensemble de couches entièrement connectées d'un réseau neuronal convolutif, dans lequel des poids de l'ensemble de couches de convolution sont gelés pour chaque niveau hiérarchique ;
l'extraction d'un deuxième ensemble d'informations visuelles de l'au moins une image à l'aide de l'ensemble appris de couches de convolution et de regroupement, dans lequel le deuxième ensemble d'informations visuelles se rapporte à des informations de deuxième niveau hiérarchique ;
le passage du premier ensemble d'informations visuelles et du deuxième ensemble d'informations visuelles de l'au moins une image à l'ensemble de couches entièrement connectées d'un réseau neuronal convolutif et à une stratégie de masquage de logit prédéfinie pour obtenir des informations hiérarchiques de deuxième niveau, dans lequel la stratégie de masquage de logit s'attaque à une incohérence d'étiquette en masquant une ou plusieurs classes non pertinentes sur la base des informations hiérarchiques de premier niveau pour obtenir les informations de deuxième niveau hiérarchique, dans lequel un masquage de logit imite un comportement d'apprentissage de chaque classe dans chaque niveau d'apprentissage ;
l'extraction d'un troisième ensemble d'informations visuelles de l'au moins une image à l'aide de l'ensemble appris de couches de convolution et de regroupement ;
le passage du premier ensemble d'informations visuelles, du deuxième ensemble d'informations visuelles et du troisième ensemble d'informations visuelles de l'au moins une image à l'ensemble de couches entièrement connectées d'un réseau neuronal convolutif et à une stratégie de masquage de logit prédéfinie pour obtenir des informations hiérarchiques de troisième niveau
; et
la création d'une taxonomie à l'aide des informations hiérarchiques de premier niveau, des informations hiérarchiques de deuxième niveau et des informations hiérarchiques de troisième niveau pour faciliter un étiquetage hiérarchique de l'article prédéfini.

5. Système (100) selon la revendication 4, dans lequel le réseau neuronal convolutif est appris progressivement au nième niveau en considérant des informations visuelles d'un premier niveau à (n-1) niveaux.

6. Système (100) selon la revendication 5, dans lequel l'apprentissage progressif comprend :
un apprentissage de noeud racine, dans lequel le réseau neuronal convolutif est appris indépendamment à l'aide d'une perte d'entropie croisée ; et
la fusion d'informations visuelles du niveau de taxonomie prédécesseur aux informations visuelles à ce niveau, dans lequel, lors de la fusion des informations visuelles du niveau de taxonomie prédécesseur, un ou plusieurs poids de l'ensemble de couches de convolution du niveau de taxonomie prédécesseur sont gelés pour empêcher un alignement de poids sur une nouvelle tâche à l'aide d'étiquettes d'un nouveau niveau.

7. Un ou plusieurs supports de stockage d'informations lisibles par machine non transitoires comprenant une ou plusieurs instructions qui, lorsqu'elles sont exécutées par un ou plusieurs processeurs matériels, amènent :
la collecte, via une interface d'entrée/sortie (E/S), d'au moins une image d'un article prédéfini ;
l'apprentissage progressif à l'aide d'une représentation globale cumulative d'au moins un ensemble de couches de convolution et de regroupement à l'aide de l'au moins une image collectée sur la base d'une technique de rétropropagation, dans lequel une vérité de terrain de niveau prédécesseur est utilisée comme entrée pendant un apprentissage en masquant une partie d'un logit et en utilisant une partie restante du logit pour un apprentissage et dans lequel la sortie du niveau prédécesseur est considérée comme la représentation globale dans chaque niveau d'apprentissage et dans lequel la représentation globale à partir d'un niveau précédent est augmentée pour obtenir une contrainte par étiquette à partir du niveau précédent ;
l'extraction d'un premier ensemble d'informations visuelles de l'au moins une image à l'aide de l'au moins un ensemble appris de couches de convolution et de regroupement, dans lequel le premier ensemble d'informations visuelles se rapporte à des informations de premier niveau hiérarchique et dans lequel la représentation globale dans des niveaux ultérieurs est extraite à partir d'une couche de regroupement moyenne globale du niveau prédécesseur ;
la classification du premier ensemble d'informations visuelles extrait de l'au moins une image en des informations hiérarchiques de premier niveau à l'aide d'un ensemble de couches entièrement connectées d'un réseau neuronal convolutif, dans lequel des poids de l'ensemble de couches de convolution sont gelés pour chaque niveau hiérarchique ;
l'extraction d'un deuxième ensemble d'informations visuelles de l'au moins une image à l'aide de l'ensemble appris de couches de convolution et de regroupement, dans lequel le deuxième ensemble d'informations visuelles se rapporte à des informations de deuxième niveau hiérarchique ;
le passage du premier ensemble d'informations visuelles et du deuxième ensemble d'informations visuelles de l'au moins une image à l'ensemble de couches entièrement connectées d'un réseau neuronal convolutif et à une stratégie de masquage de logit prédéfinie pour obtenir des informations hiérarchiques de deuxième niveau, dans lequel la stratégie de masquage de logit s'attaque à une incohérence d'étiquette en masquant une ou plusieurs classes non pertinentes sur la base des informations hiérarchiques de premier niveau pour obtenir les informations de deuxième niveau hiérarchique, dans lequel un masquage de logit imite un comportement d'apprentissage de chaque classe dans chaque niveau d'apprentissage ;
l'extraction d'un troisième ensemble d'informations visuelles de l'au moins une image à l'aide de l'ensemble appris de couches de convolution et de regroupement ;
le passage du premier ensemble d'informations visuelles, du deuxième ensemble d'informations visuelles et du troisième ensemble d'informations visuelles de l'au moins une image à l'ensemble de couches entièrement connectées d'un réseau neuronal convolutif et à une stratégie de masquage de logit prédéfinie pour obtenir des informations hiérarchiques de troisième niveau ; et
la création d'une taxonomie à l'aide des informations hiérarchiques de premier niveau, des informations hiérarchiques de deuxième niveau et des informations hiérarchiques de troisième niveau pour faciliter un étiquetage hiérarchique de l'article prédéfini.

8. Un ou plusieurs supports de stockage d'informations lisibles par machine non transitoires selon la revendication 7, dans lequel le réseau neuronal convolutif est appris progressivement au nième niveau en considérant des informations visuelles d'un premier niveau à (n-1) niveaux.

9. Un ou plusieurs supports de stockage d'informations lisibles par machine non transitoires selon la revendication 8, dans lequel un apprentissage progressif comprend:
un apprentissage de noeud racine, dans lequel le réseau neuronal convolutif est appris indépendamment à l'aide d'une perte d'entropie croisée ; et
la fusion d'informations visuelles d'un niveau de taxonomie prédécesseur aux informations visuelles à ce niveau, dans lequel pendant la fusion des informations visuelles du niveau de taxonomie prédécesseur, un ou plusieurs poids de l'ensemble de couches de convolution du niveau de taxonomie prédécesseur sont gelés pour empêcher un alignement de poids sur une nouvelle tâche à l'aide d'étiquettes d'un nouveau niveau.
